# EUROPÄISCHE PATENTSCHRIFT

(11) **EP 2 027 618 B1**
(45) Veröffentlichungstag und Bekanntmachung des Hinweises auf die Patenterteilung: **09.11.2011**
(21) Anmeldenummer: 07722386.5
(22) Anmeldetag: 09.05.2007
(51) Int. Cl.: H01M 2/38, H01M 10/42, H01M 2/02, H01M 2/36, H01M 10/12

(54) **BATTERIE MIT ELEKTROLYTDURCHMISCHUNGSVORRICHTUNG**
BATTERY COMPRISING AN ELECTROLYTE MIXING DEVICE
BATTERIE COMPRENANT UN DISPOSITIF DE MÉLANGE D'ÉLECTROLYTE

(30) Priorität: 09.05.2006 DE 102006021585
(43) Veröffentlichungstag der Anmeldung: 25.02.2009
(73) Patentinhaber: IQ Power Licensing AG, 6300 Zug (CH)
(72) Erfinder: BAUER, C., Günther, 85521 Ottobrunn (DE); TSCHIRCH, Steffen, 09405 Zschopau (DE)
(74) Vertreter: Müller & Schubert
(86) Internationale Anmeldenummer: PCT/DE2007/000832
(87) Internationale Veröffentlichungsnummer: WO 2007/128291

(56) Entgegenhaltungen:
- WO-A-99/19923
- DE-A1- 19 722 361

## Beschreibung

Die Erfindung betrifft eine Batterie mit flüssigem Elektrolyt, nachfolgend Flüssigelektrolytbatterie genannt, die vorzugsweise in bewegten Fahrzeugen, wie z. B. in PKW, Booten oder Flugzeugen zum Einsatz kommt und eine Vorrichtung zur Elektrolytdurchmischung aufweist.

Das Bestreben der Fahrzeugindustrie nach Leichtbauweise betrifft auch die Einsparung von Batteriegewicht. Gleichzeitig steigt jedoch die Anforderung nach höherer Batterieleistung, da neben der herkömmlichen Energie zum Starten z. B. eines PKW auch Energie für zusätzliche Aggregate wie elektrische Fensterheber, Stellmotore zum Verstellen der Sitze oder auch zum elektrischen Beheizen der Sitze benötigt wird. Ferner ist es wünschenswert, die Batterieleistung über die Lebensdauer der Batterie möglichst auf einem konstanten hohen Niveau zu halten, da zunehmend auch sicherheitsrelevante Funktionseinheiten wie Lenkung und Bremsen elektrisch gesteuert und betätigt werden. Unter Batterieleistung wird nachfolgend die Kapazität der Batterie sowie die Fähigkeit der Batterie zur Stromabgabe bzw. zur Stromaufnahme verstanden. Die Batterieleistung wird von verschiedenen, dem Fachmann bekannten Faktoren beeinflußt.

Aus dem Stand der Technik sind verschiedene Maßnahmen bekannt, um die Leistung einer Batterie mit einem flüssigen Elektrolyten, wie z. B. einer Blei-Säure-Batterie, zu erhöhen. Ein besonderes Problem bei Blei-Säure-Batterien ist die sogenannte Stratifikation der Säure, d. h. die Säurekonzentration ist bezüglich der Elektrodenfläche nicht gleichmäßig. Das bewirkt, daß die Elektroden an Stellen, an denen die Säurekonzentration zu hoch ist, korrodieren, so daß sich die Lebensdauer der Batterie vermindert, und an den Elektrodenstellen, an denen die Säurekonzentration zu gering ist, erreicht die Batterie nicht ihre volle Leistung.

Daher sind unterschiedliche Vorrichtungen und Verfahren entwickelt worden, um den Elektrolyten umzuwälzen, damit die Säurekonzentration in allen Volumenabschnitten der Batterie gleich groß ist. Bei stationären Batterien wird z. B. Luft in den Elektrolyten eingeblasen. Für Fahrzeugbatterien sind Elektrolytdurchmischungsvorrichtungen bekannt, die als hydrostatische Pumpen bezeichnet werden. Diese Vorrichtungen sind nur bei sich bewegenden Fahrzeugen wirksam, da sie Brems- und Beschleunigungsvorgänge in Verbindung mit der Massenträgheitskraft des flüssigen Elektrolyten nutzen. Diese Technik ist dem Fachmann bekannt, so daß lediglich beispielhaft auf die Dokumente US 4,963,444; US 5,096,787 und US 5,032,476 und DE 297 18 004.5 verwiesen wird.

Die Erfinder der vorliegenden Erfindung haben jedoch ermittelt, daß mit diesen aus dem Stand der Technik bekannten Vorrichtungen noch keine optimale Elektrolytdurchmischung erreichbar ist.

Die Aufgabe der Erfindung besteht in der Schaffung einer Flüssigelektrolytbatterie mit Elektrolytdurchmischung durch beschleunigte Bewegungen der Batterie, wobei die Elektrolytdurchmischung gegenüber dem Stand der Technik verbessert werden soll.

Die Aufgabe wird mittels einer Batterie nach Anspruch 1 gelöst, wobei die Batterie aufweist:

Ein Gehäuse mit Seitenwänden, einem Gehäuseboden und einer Abdeckung. Dieses Gehäuse bildet eine Batteriezelle. Häufig sind mehrere solcher Batteriezellen zu einer Batterie mit einem Mehrfachgehäuse zusammengefaßt. In dem vorzugsweise rechteckigen Gehäuse sind die plattenförmigen Elektroden angeordnet, die von dem Flüssigelektrolyt bedeckt sind.

Zum Umwälzen des Elektrolyts bei einer positiven oder negativen Beschleunigung der Batterie in einer Vorzugsrichtung ist eine Flüssigelektrolyt-Umwälzvorrichtung vorgesehen, die nachfolgende Merkmale aufweist:

Parallel zu den senkrechten Kanten der Elektroden ist je eine Strömungskanalplatte beabstandet angeordnet, so daß zwischen der jeweiligen Batteriegehäusewand und der Strömungskanalplatte je ein Strömungskanal ausbildet ist. Wie im Ausführungsbeispiel noch näher erläutert, wird bei einer Beschleunigung der Batterie in der vorbestimmten Richtung der Elektrolyt durch den Strömungskanal nach oben gedrückt. Das Ende des Strömungskanals ist ein Ausströmschlitz, an den sich oberhalb des Elektrolytpegelstandes eine näherungsweise waagerechte oder leicht zur Querschnittsmitte der Batterie geneigte Ablaufplatte anschließt, über die der ausströmende Elektrolyt abläuft, so daß ein Elektrolytkreislauf entsteht.

Erfindungsgemäß ist die Ablaufplatte speziell ausgebildet und weist nachfolgende Merkmale auf:

Eine senkrechte Trennwand, die von einer Seite des linksseitigen Ausströmschlitz zes zu der diagonal entgegengesetzten Seite des rechtsseitigen Ausströmschlitzes verläuft, so daß ausgehend vom jeweiligen Ausströmungsschlitz je ein sich verjüngender Ablaufkanal ausgebildet ist. In jedem Ablaufkanal ist die Ablauföffnung im Abstand X von dem dazugehörigen Ausströmschlitz ausgebildet. Dieser Abstand X ist größer als die Hälfte der Gehäuselänge, d. h. der aus dem linken Ausströmungsschlitz austretende Elektrolyt wird in die rechte Batteriehälfte eingetragen und der aus dem rechten Ausströmungsschlitz austretende Elektrolyt wird in die linke Batteriehälfte eingetragen. Das bewirkt eine gute Durchmischung. Es ist erforderlich, daß die Ablauföffnung so groß bemessen ist, daß das aus dem jeweiligen Ausströmschlitz ausströmende Elektrolytvolumen schnell ablaufen kann, damit ein Rücklauf des Elektrolyts vermieden wird, wenn die Batteriebeschleunigung gleich Null wird.

Nach Anspruch 2 ist die Ablauföffnung aus mehrere Einzelöffnungen ausgebildet. Diese Ausführungsform ist besonders zweckmäßig, da über die Größe und über die Anzahl der einzelnen Öffnungen bewirkt wird, daß sich der Elektrolyt über einen größeren Bereich gleichmäßig verteilt, wodurch sich die Durchmischung weiter verbessert. Die zweckmäßige Größe und die Verteilung der einzelnen Öffnungen, die auch unterschiedlich groß sein können, wird vom Fachmann durch einfache Versuche ermittelt; damit der Elektrolyt bezogen auf die Fläche der Ablauföffnung möglichst gleichmäßig abläuft.

Nach Anspruch 3 ist näherungsweise mittig zum Gehäusequerschnitt von oben gesehen eine Elektrolyteinfüllöffnung mit einem hochgezogenem Rand vorgesehen. Diese besonders bevorzugte Ausführungsform ermöglicht eine effektive Montage und eine vollautomatische Befüllung der Batterie.

Weitere Maßnahmen und Vorteile der Erfindung ergeben sich aus der nachfolgenden Beschreibung der Ausführungsbeispiele in Verbindung mit den beigefügten schematischen Zeichnungen.
- Fig. 1: zeigt eine Draufsicht auf eine erfindungsgemäße offene Flüssigelektrolytbatterie mit einer schematischen Darstellung des Elektrolytflusses.
- Fig. 2: zeigt eine perspektivische Seitenansicht der Ablaufplatte.
- Fig. 3: zeigt eine Draufsicht von Fig. 2.
- Fig. 4: zeigt eine Draufsicht auf eine offene Flüssigelektrolytbatterie. mit einer schematischen Darstellung der Erfindung in einer zweiten Ausführungsform.
- Fig. 5: zeigt einen leeren Batteriekasten nach dem Stand der Technik.
- Fig. 6 und 7: zeigen eine Schnittdarstellung einer Flüssigelektrolytbatterie mit einer Durchmischungsvorrichtung nach dem Stand der Technik.

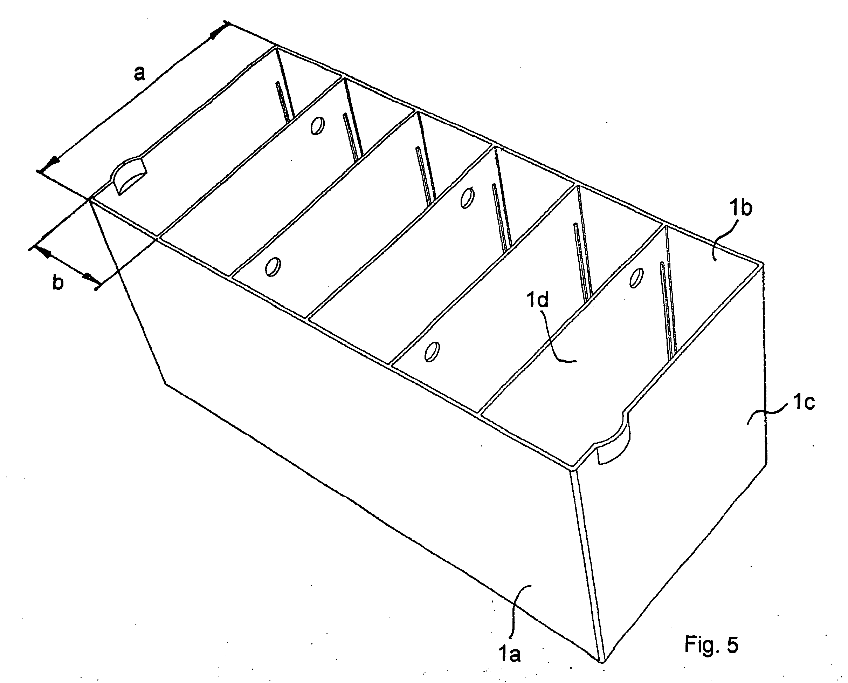

Die nachfolgende Erläuterung der Erfindung beginnt mit dem Stand der Technik aus Fig. 5, 6 und 7, da dadurch die Erfindung leichter verständlich wird.

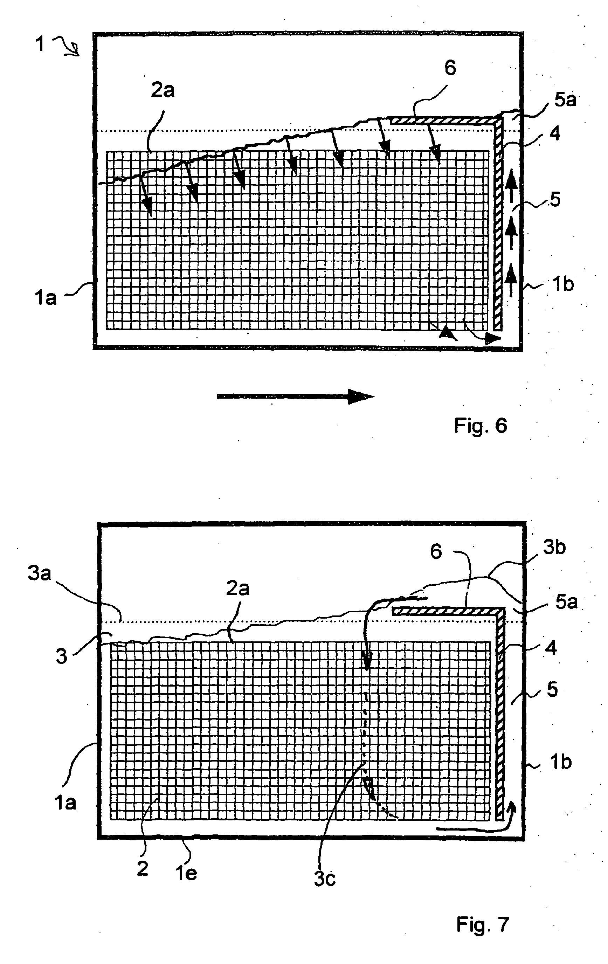

Die Fig. 5 zeigt einen Batteriekasten mit 6 Zellen. Alle nachfolgenden Erläuterungen beziehen sich auf eine einzige Zelle, wobei diese Zelle in Fig. 6 und 7 von der Richtung aus dargestellt ist, die in Fig. 5 mit dem Bezugszeichen 1c bezeichnet ist.

Die Fig. 6 und 7 dienen zur Erläuterung der prinzipiellen Wirkung der Elektrolytdurchmischung.

Eine Flüssigelektrolytbatterie nach dem Stand der Technik hat ein Gehäuse 1, Seitenwänden 1a und 1 b und eine Vorder- und Rückwand. In dem Gehäuse sind Elektroden 2 senkrecht stehend angeordnet. In dem Gehäuse 1 befindet sich ein Flüssigelektrolyt 3, der ca. 1 cm über der Oberkante 2a der Elektroden 2 steht.

Die Fig. 6 zeigt die Darstellung, wenn die Flüssigelektrolytbatterie eine Beschleunigung erfährt und der Pegel des Elektrolyten in Schräglage kommt. Dieser Fall tritt ein, wenn die Batterie z. B. in einen PKW so eingebaut ist, daß die Elektrodenplatten sich in Fahrtrichtung erstrecken, die in diesem Beispiel in der Bildebene von links nach rechts verläuft. Die winkelförmige Durchmischungsvorrichtung mit der Strömungskanalplatte 4 und der Ablaufplatte 6 ist zum leichteren Verständnis der Zusammenhänge nur auf der rechten Seite des Gehäuses vorgesehen. Wenn das fahrende Fahrzeug abgebremst wird, bewirkt die Massenträgheit des Elektrolyts, daß dieser in Fahrtrichtung schwappt, was durch den schräg liegenden Pegelstand nur schematisch angedeutet ist. Die kleinen Pfeile zeigen die Strömungsrichtung des Elektrolyten, der in dem Strömungskanal 5 aufwärts gedrückt wird, so daß sich anschließend, wie in Fig. 7 dargestellt, auf der Ablaufplatte 6 eine kleine Elektrolytwelle 3b ausbildet, die über die Ablaufplatte 6 wieder in die Batterie zurückläuft. Es ist für den Fachmann vorstellbar, daß der Elektrolyt auf diese Art und Weise durchmischt wird, wobei der angedeutete Elektrolytkreislauf 3c jedoch zeigt, daß nicht das gesamte Batterievolumen erfaßt wird, was jedoch wünschenswert wäre.

Der Elektrolytkreislauf wurde bei der Erfindung wesentlich verbessert, so daß nunmehr auch dann eine gute Durchmischung eintritt, wenn die Batterie nicht in der Vorzugsrichtung, sondern quer dazu eingebaut ist, so daß ein Schwappen des Elektrolyts bevorzugt beim Kurvenfahren eintritt.

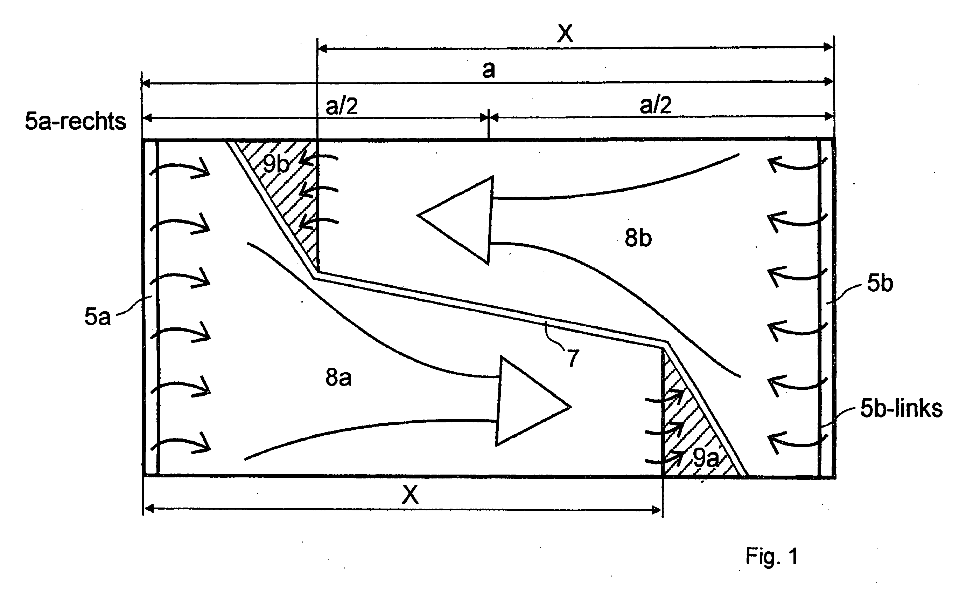

Die Fig. 1 zeigt eine Draufsicht auf die geöffnete Batterie, so daß die Ablaufplatte erkennbar ist, deren Aufbau nachfolgend erläutert wird:

Die Ablaufplatte deckt die Batterie bis auf die Ablauföffnung 9a, 9b ab. Mit dem Bezugszeichen 5a-rechts ist das rechte Ende des Ausströmschlitzes 5a des linksseitigen Strömungskanals bezeichnet und mit dem Bezugszeichen 5b-links ist das linke Ende des Ausströmschlitzes 5b des rechtsseitigen Strömungskanals bezeichnet. Zwischen diesen zwei Punkten verläuft eine Trennwand 7, die zweimal abgewinkelt ist. Ausgehend von den Ausströmschlitzen 5a, 5b, die so breit wie das Batteriegehäuse sind, verläuft links und rechts je ein Ablaufkanal 8a, 8b. Diese Ablaufkanäle sind anfangs so breit wie der Ausströmschlitz und verjüngen sich in Fließrichtung. Durch die doppelte Abwinklung der Trennwand 7 verjüngen sich die Ablaufkanäle bei dieser Ausführungsform ca. auf die halbe Breite des Batteriegehäuses und verlaufen nebeneinander. Am verjüngten Ende des Ablaufkanals sind die Ablauföffnungen 9a und 9b schraffiert eingezeichnet. Die Kante der Ablauföffnungen, über die der Elektrolyt zurückfließt, ist in einem Abstand X vom jeweiligen Ausströmschlitz vorgesehen, wobei der Abstand X größer als die halbe Länge des Batteriegehäuses ist. Mit anderen Worten heißt das, die Ablauföffnungen 9a. der Ablaufkanäle überlappen sich, so daß an der linken Seite der Batterie aufsteigender Elektrolyt über den linken Ablaufkanal in die rechte Volumenhälfte der Batterie eingetragen wird und umgekehrt. Somit entsteht ein nahezu vollständiger Elektrolytkreislauf, der Konzentrationsunterschiede weitgehend vermeidet.

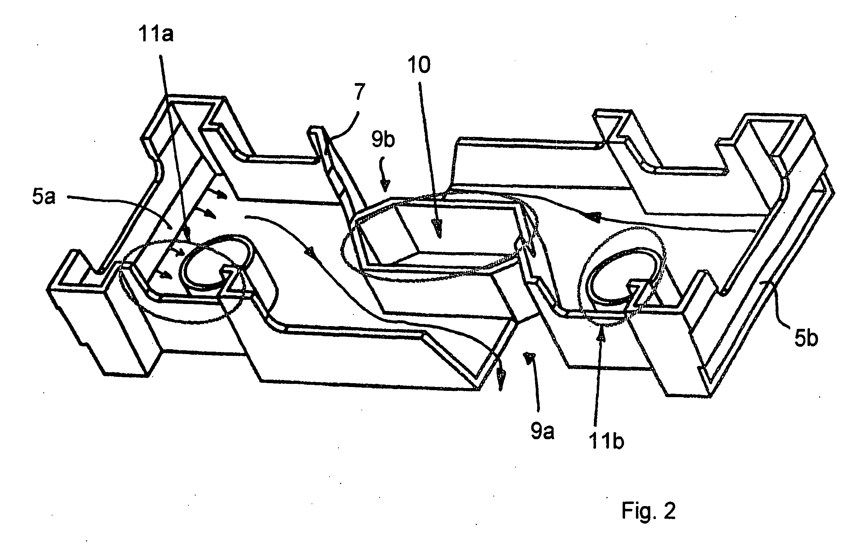

In Fig. 2 ist die Ablaufplatte in einer dreidimensionalen Darstellung gezeigt, aus der Aufbau und der Fluß des Elektrolyten noch besser erkennbar sind. Mit Bezugszeichen 10 ist die Einfüllöffnung für den Elektrolyten gekennzeichnet und mit Bezugszeichen 11a, 11b sind zwei Ausnehmungen bezeichnet, die zur Aufnahme der elektrischen Batteriepole dienen. Die kleinen Pfeile zeigen den Austritt des Elektrolyten und die langen Pfeile die Fließrichtung an.

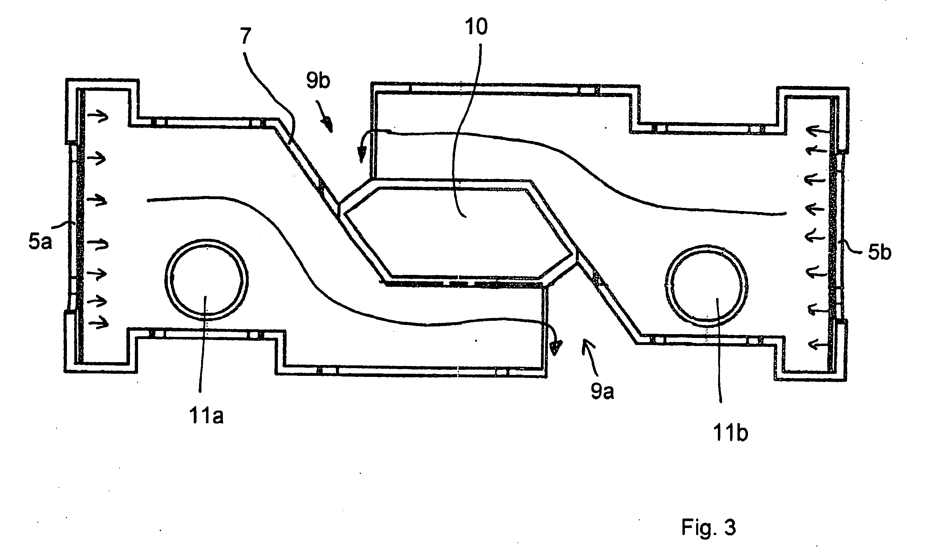

In Fig. 3 ist die Ablaufplatte aus Fig. 2 in der Draufsicht dargestellt.

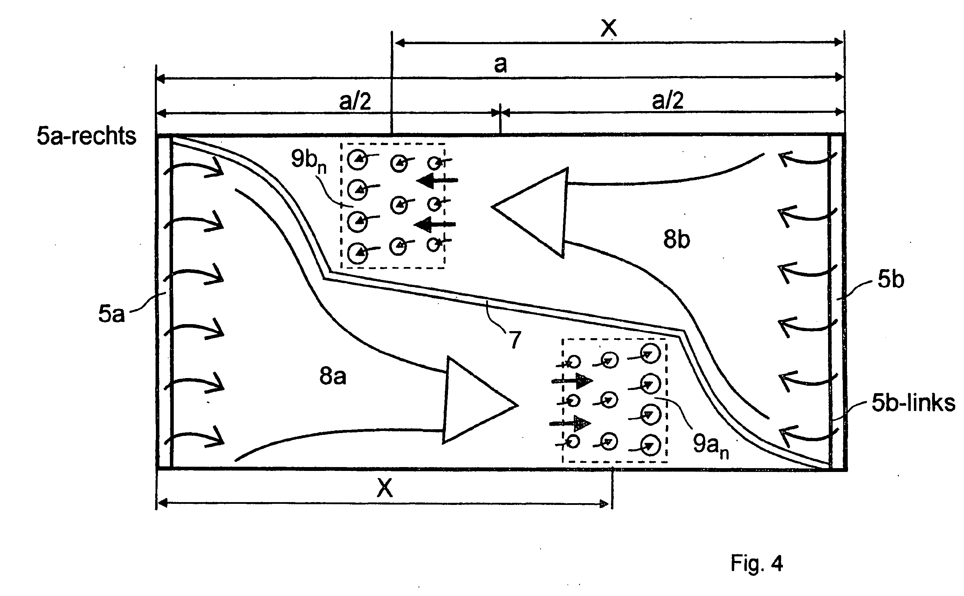

Die Fig. 4 zeigt eine modifizierte Ablaufplatte. Anstelle von einer einzigen Ablauföffnung sind mehrere Ablauföffnungen 9aₙ und 9bₙ innerhalb eines Bereichs vorgesehen. Die Größe und die Form und die räumliche Anordnung der Ablauföffnungen ist so gewählt, daß sich der Elektrolyt möglichst über eine große Eintrittsfläche auf der jeweils gegenüber liegenden Batteriehälfte verteilt. Das wird dadurch erzielt, daß Ablauföffnungen am Kanalende größer oder häufiger sind als die davor liegenden Ablauföffnungen. Die optimale Anordnung und Größe der Ablauföffnungen muß mit wenigen Experimenten ermittelt werden, wobei prinzipiell die optimale Anordnung auch rechnerisch erfolgen kann.

## Patentansprüche

1. Batterie mit flüssigem Elektrolyt, die aufweist:
- ein Gehäuse **(1)** mit Seitenwänden **(1a, 1b, 1c, 1d),** einem Gehäuseboden **(1e)** und einer Abdeckung,
- Elektroden **(2),** die in dem Gehäuse **(1)** angeordnet sind, wobei das Gehäuse **(1)** in der Draufsicht einen rechteckigen Querschnitt mit einer Länge **a** und einer Breite **b** aufweist.
- einen Flüssigelektrolyt **(3),** dessen Pegelstand **(3a)** in dem Gehäuse **(1)** bis über die Oberkante **(2a)** der Elektroden **(2)** reicht und
- eine Flüssigelektrolyt-Umwälzvorrichtung, die nachfolgende Merkmale aufweist:
- parallel zu den senkrechten Kanten der Elektroden **(2)** ist je eine Strömungskanalplatte **(4)** angeordnet, die zwischen sich und den Batteriewänden **(1a, 1b)** einen links- und rechtsseitigen Strömungskanal **(5)** ausbildet, der je einen Ausströmschlitz **(5a, 5b)** aufweist,
- oberhalb des Pegelstandes **(3a)** ist eine Ablaufplatte **(6)** angeordnet, über die der aus dem Ausströmschlitz nach oben ausströmende Elektrolyt zu Gehäusemitte zu abläuft, **dadurch gekennzeichnet, daß**
die Ablaufplatte **(6)** nachfolgende Merkmale aufweist:
- eine senkrechte Trennwand **(7),** die von einer Seite **(5a-rechts)** des linksseitigen Ausströmschlitzes **(5a)** zur diagonal entgegengesetzten Seite **(5b-links)** des rechtsseitigen Ausströmschlitzes **(5b)** verläuft, so daß ausgehend vom jeweiligen Ausströmschlitz **(5a, 5b)** je ein sich verjüngender Ablaufkanal **(8a, 8b)** ausgebildet ist und
- in jedem Ablaufkanal **(8a, 8b)** im Abstand **X** von dem dazugehörigen Ausströmschlitz **(5a, 5b)** eine Ablauföffnung **(9a, 9b)** ausgebildet ist, wobei
- der Abstand **X** größer als a/2 ist und
- die Größe der Ablauföffnung so bemessen ist, daß das aus dem jeweiligen Ausströmschlitz ausströmende Elektrolytvolumen ohne Verzögerung ablaufen kann.

2. Batterie nach Anspruch 1, **dadurch gekennzeichnet, daß** die Ablauföffnung **(9a, 9b)** aus mehrere Einzelöffnungen **(9an, 9bn)** gebildet ist.

3. Flüssigelektrolytbatterie nach Anspruch 1, **dadurch gekennzeichnet, daß** näherungsweise mittig zum Gehäusequerschnitt von oben gesehen eine Elektrolyteinfüllöffnung **(10)** mit einem hochgezogenem Rand vorgesehen ist.

## Claims

1. Battery with liquid electrolyte, comprising:
- a housing (1) with side walls (1a, 1b, 1c, 1d), a housing bottom (1e) and a top,
- electrodes (2) that are arranged in the housing (1), the housing (1) in plan view having a rectangular cross-section with a length a and a width b,
- a liquid electrolyte (3), the gauge height (3a) of which in the housing (1) reaches above the upper edge (2a) of the electrodes (2) and
- a liquid electrolyte recirculating device that has the following features:
- parallel to each of the perpendicular edges of the electrodes (2) is arranged a flow channel plate (4) which forms, between itself and the battery walls (1 a, 1 b), a left-hand and right-hand flow channel (5), each of which comprises an outflow slot (5a, 5b),
- above the gauge height (3a) is arranged a discharge plate (6) over which the electrolyte flowing upwards out of the outflow slot runs away to the centre of the housing,
**characterised in that**
the discharge plate (6) has the following features:
- a perpendicular partition wall (7) which runs from one side (5a-rechts) of the left-hand outflow slot (5a) to the diagonally opposite side (5b-links) of the right-hand outflow slot (5b), so that starting from the respective outflow slot (5a, 5b) a tapering discharge channel (8a, 8b) is formed in each case, and
- in each discharge channel (8a, 8b) at a spacing X from the associated outflow slot (5a, 5b) a discharge opening (9a, 9b) is formed,
- the distance X being greater than a/2 and
- the size of the discharge opening being such that the volume of electrolyte flowing out of the respective outflow slot is able to run away without delay.

2. Battery according to claim 1, **characterised in that** the discharge opening (9a, 9b) is formed from a plurality of individual openings (9an, 9bn).

3. Liquid electrolyte battery according to claim 1, **characterised in that** an electrolyte fill opening (10) with a raised edge is provided approximately in the centre of the housing cross-section, viewed from above.

## Revendications

1. Batterie avec un électrolyte liquide, comprenant :
- un boîtier (1) avec des parois latérales (1a, 1b, 1c, 1d), un fond de boîtier (1e) et un couvercle,
- des électrodes (2) disposées dans le boîtier (1), le boîtier (1) présentant en vue de dessus une section transversale rectangulaire d'une longueur a et d'une largeur b,
- un électrolyte liquide (3) dont le niveau (3a) dans le boîtier (1) dépasse le bord supérieur (2a) des électrodes (2), et
- un dispositif de recirculation d'électrolyte liquide présentant les particularités suivantes :
- en parallèle aux bords verticaux des électrodes (2), respectivement une plaque de canal d'écoulement (4) est disposée réalisant entre celle-ci et les parois de batterie (1a, 1b) un canal d'écoulement (5) du côté gauche et du côté droit qui présente respectivement une fente d'échappement (5a, 5b),
- au-dessus du niveau (3a) est disposée une plaque d'évacuation (6) par laquelle l'électrolyte s'échappant de la fente d'échappement vers le haut est évacué vers le centre du boîtier,
**caractérisée en ce que** la plaque d'évacuation (6) présente les particularités suivantes :
- une cloison verticale (7) qui s'étend à partir d'un côté (5a - à droite) de la fente d'échappement du côté gauche (5a) jusqu'au côté diagonalement opposé (5b - à gauche) de la fente d'échappement du côté droit (5b), de sorte qu'en partant de la fente d'échappement (5a, 5b) respective, respectivement un canal d'échappement qui s'amincit (8a, 8b) est réalisé, et
- dans chaque canal d'échappement (8a, 8b), à une distance X de la fente d'échappement associée (5a, 5b), une ouverture d'évacuation (9a, 9b) est réalisée, dans laquelle
- la distance X est supérieure à a/2, et
- la taille de l'ouverture d'évacuation est dimensionnée de telle sorte que le volume d'électrolyte s'échappant de la fente d'échappement respective peut s'évacuer sans délai.

2. Batterie selon la revendication 1, **caractérisée en ce que** l'ouverture d'évacuation (9a, 9b) est formée à partir de plusieurs ouvertures individuelles (9an, 9bn).

3. Batterie à électrolyte liquide selon la revendication 1, **caractérisée en ce qu'**approximativement au centre par rapport à la section transversale du boîtier, en vue de dessus, est prévue une ouverture de remplissage d'électrolyte (10) à bord relevé.
